# EUROPEAN PATENT APPLICATION

(11) **EP 4 008 175 A1**
(43) Date of publication of application: **08.06.2022**
(21) Application number: 21167259.7
(22) Date of filing: 07.04.2021
(51) Int. Cl.: A01G 31/02, A01K 63/04

(54) **ENERGY-SAVING AQUAPONIC SYSTEM**

(30) Priority: 02.12.2020 IT 202000029573
(71) Applicant: Agri Island S.r.l., 00147 Roma RM (IT)
(72) Inventor: Ferrari, Giordano, 00147 Roma RM (IT); Lacquaniti, Pierpaolo, 00147 Roma RM (IT); Moresco, Andrea, 00147 Roma RM (IT)
(74) Representative: Perani & Partners S.p.A.

(57) **Abstract**

An aquaponic system (1) comprises: a plurality of tanks connected in fluid communication between each other, the plurality of tanks comprising at least a first tank (2) for breeding fish species, a second tank (3) for growing vegetable species; a plurality of ducts (4), connecting the tanks in fluid communication; an aqueous fluid, configured to flow between the tanks through the ducts (4); a plurality of functional portions (5) placed at the tanks and/or ducts (4), wherein the functional portions (5) are configured to act on a fluid volume to modify physical and/or chemical parameters of the fluid volume; insulating means to thermally insulate at least partially said tanks and/or ducts (4).

## Description

### Technical field

The present invention relates to an aquaponic system.

The present invention is useful for breeding fish species and growing vegetable species according to aquaponic methodology.

### State of the art

Aquaponic systems for breeding fish species and for growing vegetable species are known in the state of the art.

These systems comprise a first tank in which fish are bred and a second tank in which plants are grown. A third tank containing nitrifying bacteria is interposed between the fish tank and the plant tank. The tanks are placed in fluid communication with each other through ducts, so that a flow of water can be exchanged periodically between the fish tank and the plant tank, passing through the third bacteria tank for a water treatment. In particular, the water in which the fish are bred, which excrete ammonia and release nutrients for the plants, is treated through the third tank and then passed on to the plants. Specifically, the nitrifying bacteria contained in the third tank transform the ammonia present into nitrates, which benefit the growth of plants. In turn, the plants, with their growth, assimilate the nitrates and other nutrients present, at the same time purifying the water itself which can return clean in the fish tanks.

Such systems require care and specific light conditions, but above all they require the water flowing between the tanks to be under specific conditions, for example of temperature.

### Problem of the prior art

For the right conditions to be established inside the tanks, such systems require the consumption of a lot of energy.

### SUMMARY OF THE INVENTION

In this context, the technical task underlying the present invention is to provide an aquaponic system which overcomes the drawbacks in the prior art as described above.

In particular, it is an object of the present invention to make available an aquaponic system for saving thermal energy and reducing consumption.

The technical task and the specified aims are substantially achieved by an aquaponic system, comprising the technical characteristics set forth in one or more of the appended claims.

### Advantages of the invention

In particular, the aquaponic system according to the present invention solves the technical problem in that it provides for the tanks and/or the ducts to be thermally insulated.

Thanks to this aquaponic system it is possible to save thermal energy and to reduce consumption, optimizing the operation of the system itself.

### Brief description of the figures

The characteristics and advantages of the present invention will become clear from the following detailed description of a possible practical embodiment, illustrated by way of non-limiting example in the set of drawings, wherein:

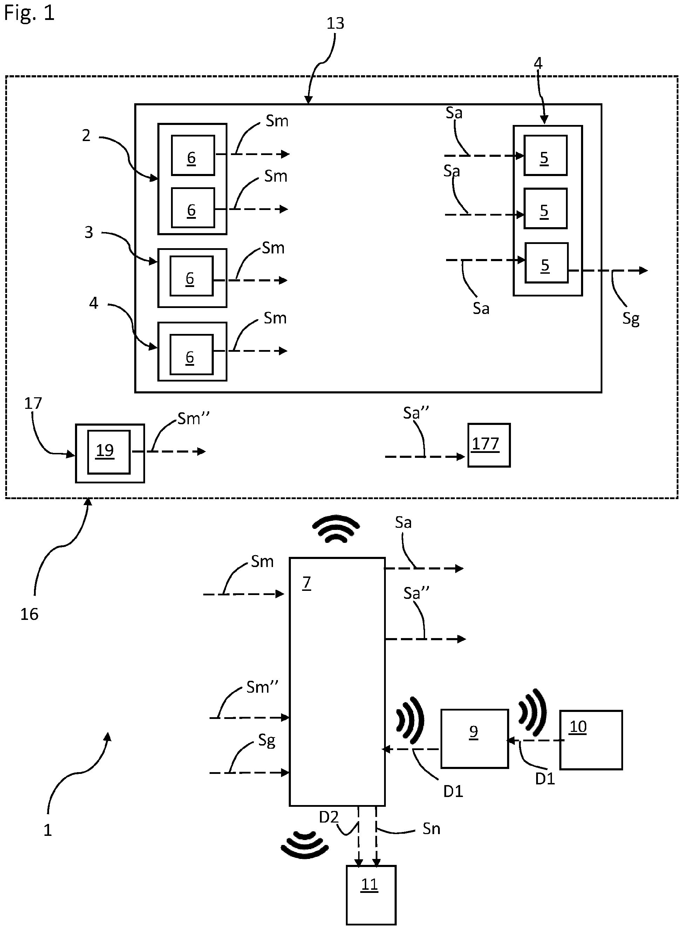

- figure 1 schematically shows the operation of an aquaponic system in accordance with the present invention;
- figure 2 shows a diagram of a portion of an aquaponic system in accordance with the present invention.

### DETAILED DESCRIPTION OF THE INVENTION

With reference to the appended figures, the present invention relates to an aquaponic system marked with reference numeral 1.

The aquaponic system 1 comprises a plurality of tanks connected in fluid communication between each other. In particular, the plurality of tanks comprises at least a first tank 2 for breeding fish species and a second tank 3 for growing vegetable species. Preferably, the plurality of tanks comprises a third tank 12 in which nitrifying bacteria are present.

The tanks have a bottom wall and at least a side wall, while the top of the tank is preferably at least partially open. For example, the side wall is unique and is configured as a circular shaped ring in the case of a cylindrical shaped tank. A polygonal-shaped tank, for example in the shape of a parallelepiped, will instead have four side walls.

The aquaponic system 1 comprises a plurality of ducts 4 connecting the tanks in fluid communication.

The aquaponic system 1 comprises an aqueous fluid, configured to flow between the tanks through the ducts 4.

Preferably, said aqueous fluid is water or an aqueous based nutrient solution. In the context of the present invention, reference will be made to water as an aqueous fluid, but without losing generality.

In use, the tanks are filled with water and, in particular, the first tank 2 contains a fish species and the second tank 3 contains one or more vegetable species creating an ecosystem.

It should be noted that water is configured to flow between the first tank 2 and the second tank 3 passing through the third tank 12 comprising the bacteria. These last ones transform the ammonia present, expelled by the fish species, into nitrates, so that the water can be transmitted to the second tank 3 free of elements harmful for the vegetable species but rich in nutrients. It should be noted that the treatment of ammonia to nitrate conversion in the aquaponic system 1 can be carried out in another manner, without providing for the third tank 12.

Preferably, the plurality of tanks comprises an algae production tank. Advantageously it is possible to use such algae as a food supplement for the fish species bred in the first tank 2.

The plurality of tanks further comprises process reservoirs such as reservoirs for collecting and/or treating the circulating aqueous fluid.

The aquaponic system 1 comprises a plurality of functional portions 5. Such functional portions 5 are located at the tanks and/or ducts 4. The functional portions 5 are configured to act on a fluid volume to modify physical and/or chemical parameters of the fluid volume. Preferably, the functional portions 5 are located at the ducts 4. In particular, the functional portions 5 act on the fluid at a stage prior or subsequent to entering one of the tanks. In other words, preferably action is taken on the circulating fluid entering and/or exiting the same tank and not at a tank. More details regarding the functional portions 5 will be provided in a later part of this description.

It should be noted that the aquaponic system 1 in accordance with the present invention comprises insulating means to thermally insulate at least part of the tanks and/or ducts 4.

Preferably, the insulating means comprise a casing (not illustrated in the accompanying Figures) wrapping the tanks. In more detail, the casing is removable. In particular, the casing is chosen based on the climatic conditions in which the aquaponic system 1 is. For example, preferably, the casing is made in a light colour to reflect heat from the sun rays. The light-coloured casing is used, for example, in summer to at least partially reflect the sun rays. Alternatively, the casing is made in a dark colour to absorb heat from the sun rays. The dark-coloured casing is used, for example, in winter to at least partially absorb the sun rays.

The casing is preferably at least partially transparent.

Preferably, the casing comprises a cloth with which the tanks are wrapped. Preferably, the system comprises automation means to enable automated winding.

The casing comprises shielding elements, preferably made of aluminium strips. In particular, such shielding elements are preferably interposed between the cloth and the respective tank. Advantageously, it is possible to shield incident solar radiation, in case of warmer temperature outside, to keep the temperature inside the tank cooler. Advantageously, it is also possible to retain heat inside in the event of colder temperatures outside, for example at night.

Preferably, the insulating means comprise layers of insulating materials surrounding the ducts 4.

In accordance with the present invention, the insulating means comprise insulating panels 18 surrounding at least partially the tanks. For example, the insulating panels 18 are made of expanded polystyrene.

Preferably, each tank stands on insulating panels 18 so that the bottom wall is in contact with the insulating panels 18.

Preferably, the tanks are surrounded by the insulating panels 18 also at the at least one side wall.

Always preferably, the tanks are underground. In particular, the collection reservoirs are underground.

Preferably, the bottom wall has a predetermined inclination with respect to the ground. In particular, according to an embodiment the tanks are arranged with a predetermined inclination with respect to the ground. According to an alternative embodiment, the tanks have the bottom wall conformed so as to have an inclination, although the tank is arranged in a non-inclined manner.

In accordance with the present invention, the aquaponic system 1 comprises one or more trees in the area surrounding the tanks and/or ducts 4.

In particular, according to a preferred embodiment, such trees comprise tall plants placed in areas of the system not exposed to solar radiation and low plants in areas exposed to solar radiation.

Preferably, the aquaponic system 1 comprises means for collecting water (not illustrated in the accompanying Figures), such as for example rainwater. Such means for collecting water comprise, for example, suitably provided gutters and inclined roofings placed at the tanks and/or at the barrier means. Advantageously, the humidity in the air that condenses on such inclined roofings is conveyed through collection gutters to particular areas. Advantageously, it is possible to irrigate the above-mentioned trees with the collected water.

According to a preferred embodiment, the plurality of tanks comprises two or more settling tanks 8. Such settling tanks 8 are configured to collect organic sediments circulating with the aqueous fluid. In fact, the aquaponic system 1 according to the present invention provides for using such sediments as biomass for energy production or, alternatively, as feed for fish species, so as to make the best use of the available resources.

In other words, the settling tanks 8 are suitable for accumulating waste and residues that fall into the water, for example dry leaves. The settling tanks 8 comprise filters to separate such organic sediments from water so that the organic sediments are retained within such tanks and the water exiting the tanks is again clean.

The aquaponic system 1 further comprises CO₂ collection means (not illustrated in the accompanying Figures), configured to collect CO₂ produced by energy production using biomass. Advantageously, the CO₂ produced can be used, for example, to correct the pH of the process water, or it can be supplied to the plants.

In the following, an aquaponic system 1 according to the preferred embodiment of the present invention is described in detail.

The aquaponic system 1 comprises a plurality of sensors 6 arranged at the tanks and/or ducts 4. In particular, each sensor 6 is configured to generate and send a respective measurement signal Sm representative of physical and/or chemical parameters of the fluid volume. Preferably, the sensors 6 are placed at the tanks 2 and 3 to monitor the ecosystem inside them. More details regarding the sensors 6 will be provided in a later part of this description.

The plurality of tanks, ducts 4, functional portions 5 and sensors 6 realize a plant 13 according to the present invention.

The aquaponic system 1 comprises a control unit 7 placed in signal communication with the sensors 6 and the functional portions 5. The control unit 7 is configured to receive and process each measurement signal Sm to generate at least one actuation signal Sa. Said actuation signal Sa is configured to actuate the functional portions 5 to regulate the physical and/or chemical parameters. In other words, the plant 13 is independently operated by the control unit 7. The control unit 7 is configured to set in the first tank 2 and in the second tank 3 the correct conditions for the growth of the fish and vegetable species by acting on the functional portions 5.

It should be noted that the aquaponic system 1 according to the present invention comprises a memory unit 9 in signal communication with the control unit 7. According to a preferred embodiment, the memory unit 9 comprises first data D1 relating to ideal physical and/or chemical parameters for growing and breeding various vegetable and fish species according to aquaponic methodology. In other words, the first data D1 represent optimal conditions for growing and breeding according to aquaponic methodology a fish and vegetable species and therefore vary based on the species selected.

The control unit 7 is configured to process the measurement signals Sm as a function of the first data D1 to generate the above-mentioned actuation signal Sa. In other words, the first data D1 provide standard values, for each living species, of the conditions that are desired to be established within the tanks. By comparing the measurement signal Sm provided by each sensor 6, which contains the value of the specific condition, for example relating to the temperature of the water in a tank, and the first data D1, the control unit 7 sends the actuation signal Sa so that the parameter concerned is corrected by the relevant functional portion 5 if it is wrong.

According to this embodiment, the first data D1 are pre-saved in the memory unit 9. Alternatively, the first data D1 are acquired by a network unit 10 external to the aquaponic system 1 and in signal communication with the memory unit 9.

Preferably, the control unit 7 is configured to monitor growth parameters of the vegetable and fish species and produce second data D2 representative of the growth parameters.

The aquaponic system 1 preferably comprises a user interface 11. The user interface 11 is configured to display and manage the physical and/or chemical parameters and/or the second data D2. The user interface 11 is placed in signal communication with the control unit 7 to regulate the physical and/or chemical parameters. Preferably, the user interface 11 takes the form of an App downloadable to a mobile device, such as a smartphone or PC, or in an internet page accessible via credentials.

According to a preferred embodiment, the control unit 7 is configured to process the second data D2 and to generate a technical report relating to a growing and breeding cycle taking place in the tanks according to the second data D2. Advantageously, it is possible to study and optimize the growing and breeding of the species in progress and to possibly reproduce them later under the same conditions.

Preferably, the chemical and/or physical parameters of the water within the tanks that are wished to be monitored are as follows: hydrostatic level, flow velocity, temperature, pH, dissolved oxygen, conductivity, but also amounts of nutrients, presence of pathogens (parasites, moulds) and heavy metals, ammonia conversion rate. Other aspects that are wished to be monitored, e.g., reported through the second D2 data, are also species and number of plants present, species and animal mass present, visual appearance of the biological mass (plants and fish).

The plurality of functional portions 5 comprises specific stations configured to act on the fluid volume with a specific action. More in detail, the functional portions 5 comprise mechanical, electromechanical, thermal, hydraulic components such as for example pumps or filters, but also heat pumps.

Preferably, the functional portions 5 comprise filtration stations 51 and/or fluid volume sanitization stations 52. Advantageously, it is possible to keep the water clean and remove any pathogens to protect the ecosystem.

The filtration stations 51 comprise bag filters and/or cartridge filters and/or sand filters. The bag and/or cartridge filters are preferably made of polypropylene. Always preferably, sand filters are made with quartzite sand.

In greater detail, the polypropylene filters may comprise activated carbon for the adsorption of pollutants that may be present or of chlorine. The polypropylene filters comprise twenty-micron or, more preferably, five-micron openings. In any case, the size of the openings can be modulated according to the specific application.

The sanitizing stations 52 comprise UV lamps and/or toroids placed within a pipe. In this way, the water is sterilized without the use of chemicals. In particular, the toroids are configured to generate a magnetic field in the water for example by altering the liquid absorption function on cell membranes of any pathogens present and by eliminating them.

Alternatively or jointly, the sanitization treatment is made with UV lamps.

The specific stations further comprise heating and/or cooling stations configured to heat and/or cool the temperature of the circulating fluid. The heating stations comprise, for example, heat exchangers and/or heat pumps. The heat exchangers are, for example, plate heat exchangers.

Preferably, the functional portions 5 comprise two or more of each specific station. Advantageously, if a single station should be inactive for some reason, for example if a failure occurs, the other station can perform the function of the first station on the fluid volume without the system coming to a standstill.

It should be noted that the plant 13 of the aquaponic system 1 according to the present invention is configured to operate on a continuous cycle. The control unit 7 provides for keeping the chemical and/or physical parameters of the water over time and provides for keeping the plant 13 active by excluding functional portions 5 if they are malfunctioning.

Preferably, the control unit 7 is configured to periodically query the various functional portions 5 to check their status, reporting any anomalies via the user interface 11. Preferably, a functional portion 5 if not functioning is configured to generate and transmit a fault signal Sg to the control unit 7. The control unit 7 is configured to receive such a fault signal Sg and to isolate the corresponding functional portion 5. The control unit 7 is also configured to generate and send a warning signal Sn representative of the fault signal Sg to the user interface 11.

Preferably, the control unit 7 is configured to process the fault signals Sg and to generate an error report as a function of the fault signals Sg.

Advantageously, the parameters of the plant 13 are adequately maintained and the operation of the aquaponic system 1 is preserved even in the event of a partial failure.

In accordance with a preferred embodiment of the aquaponic system 1, the plurality of tanks comprises a plurality of first tanks 2 for breeding fish species and a plurality of second tanks 3 for growing vegetable species. In other words, the aquaponic system 1 comprises two or more first tanks 2 for breeding fish species and two or more second tanks 3 for growing vegetable species.

Furthermore, preferably, the ducts 4 are arranged to achieve flow partitions and flow recirculations.

Advantageously it is possible to avoid downtime of the plant 13 in the event of a single component malfunctioning.

In the aquaponic system 1, the sensors 6 comprise at least one chosen from the group comprising:
- dissolved oxygen measuring probe (oximeter) D0: the dissolved oxygen in the water is maintained above 6mg/l in each portion of the plant 13;
- nutrient analyser,
- pH-meter PH: the pH is made to fluctuate between 6.7 and 7.2 depending on the species grown in the second tank 3;
- redoximeter: to control the redox potential and control the dosage of any disinfectant agents;
- conductivity meter C: the salinity is kept constantly below 1,500 µS/cm;
- flow switch: the flow must be slow to allow the grown species to absorb nutrients but also fast enough to avoid stagnation;
- level probe LIV: it preferably comprises floats which send a respective measurement signal Sm to the control unit; this signal is compared with the second data D2 and, if below the threshold, it is topped up appropriately by acting on the pumps present;
- pressure switch P: to control the operation of the filtering stations;
- thermometer T: the water temperature is maintained at 22 degrees ± 4 degrees.

Preferably, the aquaponic system 1 comprises a membrane compressor OX configured to deliver oxygen in the form of low pressure compressed air.

The aquaponic system 1 is a closed system preferably comprising barrier means 14 for defining a confined environment surrounding the plant 13 of the aquaponic system 1. In other words, the aquaponic system 1 comprises barrier means 14 to form an at least partially closed area surrounding the tanks and/or ducts 4.

It should be noted that the plant 13 according to the present invention, together with the barrier means 14, realizes a greenhouse 16 according to the present invention. Such a greenhouse 16 is given by the plant 13 plus the environment surrounding the plant 13 and enclosed within the barrier means 14.

In particular, the aquaponic system 1 preferably comprises an air treatment unit placed internally to said barrier means 14, i.e., in the greenhouse 16.

The barrier means 14 have side areas preferably made of rigid panels, for example of polycarbonate, to provide structural support, and a central area, preferably made of a transparent plastic film. The barrier means 14 also have openable entry/exit areas for access to the plant 13 and/or to allow air circulation. Preferably, the barrier means 14 comprise an anti-aphid net to limit external contamination by insects. In particular, the anti-aphid net is placed at these openable areas.

Preferably, the aquaponic system 1 comprises a lighting system (not illustrated in the accompanying Figures). The lighting system comprises light sensors and adjustable lamps. The light sensors are programmable depending on the species being grown and/or bred. The intensity of the light emitted by the lamps can be modulated as a function of the natural light present. Preferably, this step is also carried out by the control unit 7. In accordance, the light sensors are in signal communication with the control unit 7 and are configured to send a respective measurement signal to the control unit 7. As a function of the measurement signal, the control unit 7 sends an actuation signal to the lamps so that the plants always receive the same amount of light or at least a predetermined amount of light, for example variable at different times of the day.

Preferably, the aquaponic system 1 comprises a ventilation system 17 configured to ensure adequate air exchange. The ventilation system 17 comprises ventilation means located at the barrier means 14 and configured to force a flow of air into/out of the greenhouse 16. For example, the ventilation means comprise an air extractor 177. Preferably, the ventilation system 17 comprises a plurality of micro wind plants located at the barrier means.

In accordance with the present invention, the system 1 comprises means for carrying out a thermal pre-treatment of the air that is introduced into the greenhouse 16. This thermal pre-treatment of the air exploits the superficial contact of the air with the water contained inside the process reservoirs, so that the air enters the tank for breeding fish species and/or for growing vegetable species at the appropriate temperature. For example, the external air taken in the summer season is cooled by a few degrees centigrade before being introduced.

The ventilation system further comprises a humidity sensor and/or a temperature sensor 19 located within the greenhouse 16 to detect the humidity and the temperature of the air present in the greenhouse 16.

Preferably, this step is also carried out by the control unit 7. In accordance, the humidity and/or temperature sensors 19 are in signal communication with the control unit 7 and are configured to send a respective measurement signal Sm" to the control unit 7. As a function of the measuring signal Sm", the control unit 7 sends an actuation signal Sa" to the ventilation means. The air exchange can also be carried out automatically by the ventilation system 17 for a preset number of times per hour. Preferably, the ventilation system 17 is configured to perform forty/sixty air exchanges per hour.

Preferably, the aquaponic system 1 comprises a camera (not illustrated in the accompanying Figures) configured to capture images of the tanks. The camera is located inside greenhouse 16. The camera is placed in signal communication with the user interface 11. In accordance, it is possible, via the user interface 11, to remotely monitor the greenhouse 16 in real time.

Preferably, the aquaponic system 1 is configured to be provided in a preassembled manner so that it can be put into operation independently by those who will use it.

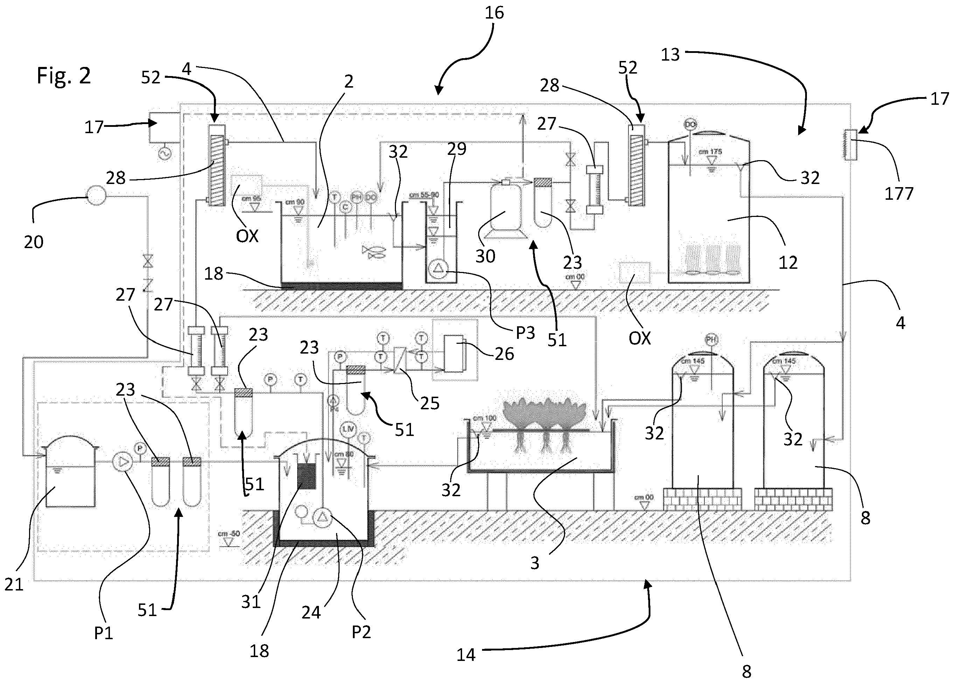

With particular reference to Figure 2, an example of an embodiment of a portion of an aquaponic system 1 according to the present invention is described below.

The water is transmitted from a tanker truck 20, or from a local water supply, to a first reservoir 21 configured to carry out a first disinfection in which the water is treated in order to prepare it for the operating cycle. Then, the fluid is pumped through a pump P1 into a filtration station 51 comprising polypropylene containers comprising polypropylene cartridge filters 23. Such cartridge filters 23 take the form of filters with twenty-micron or five-micron openings and an activated carbon filter. Then, the water is introduced into a second reservoir 24 from which the fluid itself is branched into various paths. The water in the second reservoir 24 is partly pumped via a pump P4 towards a filtration station 51 after which it passes through a plate heat exchanger 25, connected to a heat pump 26, to be then introduced back into the second reservoir 24. In particular, the water is heated by using a double independent circuit configuration, wherein the plate heat exchanger 25 ensures that the water is free of possible contamination. Part of the water from the second reservoir 24 is also pumped via a pump P2 to a filtration station 51 and thus the flow is diverted to a flowmeter 27, and then passes through a UV lamp 28 for sterilization and is introduced into the first fish breeding tank 2. On the other hand, the second branch provides for the introduction into the second tank 3 for growing plants after passing through a further flowmeter 27. Therefore, the flow of water from the second tank 3 returns to the second reservoir 24 via a drain 32, to be again sorted as described. From the first tank 2, the flow is instead discharged to a third reservoir 29 and then pumped via a pump P3 into a quartz sand filter 30. Part of the flow at this point is sent to a recirculation so that it returns to the second reservoir 24 passing through a polypropylene bag filter 31. The other part of the flow is instead transmitted to a polypropylene cartridge filter 23. The fluid is then partly reintroduced into the first tank 2 and partly transmitted to a flowmeter 27 and, passing through a UV lamp 28, it reaches the third tank 12 where biological filtration is carried out by bacteria. From here, the flow, by means of a drain 32, is transmitted subdivided into two respective settling tanks 8, one of which is connected to the other, from which it is discharged to the second tank 3 and finally again to the second reservoir 24 to repeat the cycle.

The drains 32 are preferably located at the free surface and are preferably drop drains. Preferably, turbines of the micro hydroelectric type are placed at the drains.

## Claims

1. Aquaponic system (1) comprising:
- a plurality of tanks connected in fluid communication between each other, said plurality of tanks comprising at least
- a first tank (2) for breeding fish species,
- a second tank (3) for growing vegetable species;
- a plurality of ducts (4), connecting the tanks in fluid communication;
- an aqueous fluid, configured to flow between the tanks through the ducts (4);
- a plurality of functional portions (5) placed at said tanks and/or ducts (4), said functional portions (5) being configured to act on a fluid volume to modify physical and/or chemical parameters of the fluid volume;
**characterised by comprising**
- insulating means to thermally insulate at least partially said tanks and/or ducts (4).

2. Aquaponic system (1) according to the preceding claim, wherein said insulating means comprise a casing wrapping the tanks, said casing being removable based on the climatic conditions in which the aquaponic system (1) is.

3. Aquaponic system (1) according to claim 2, wherein said casing comprises shielding elements.

4. Aquaponic system (1) according to claim 2 or 3, wherein said casing comprises a cloth at least partly transparent, said cloth being made in a light or dark colour, respectively to reflect or absorb heat.

5. Aquaponic system (1) according to any one of the preceding claims, wherein said insulating means comprise insulating panels (18) surrounding at least partially said tanks.

6. Aquaponic system (1) according to claim 5, wherein the tanks have a bottom wall and at least a side wall, said tanks standing on said insulating panels (18) so that the bottom wall is in contact with said insulating panels (18).

7. Aquaponic system (1) according to claim 6, wherein said bottom wall has a predefined inclination in relation to the ground.

8. Aquaponic system (1) according to any one of the preceding claims, comprising barrier means (14) to form an area surrounding the tanks and/or ducts (4), said aquaponic system (1) further comprising an air-treatment unit placed inside said barrier means (14).

9. Aquaponic system (1) according to claim 8, comprising one or more trees in said area surrounding the tanks and/or ducts (4).

10. Aquaponic system (1) according to any one of the preceding claims, wherein said plurality of tanks comprises two or more settling tanks (8) configured to collect organic sediments circulating with the aqueous fluid.
